# EUROPEAN PATENT SPECIFICATION

(11) **EP 1 307 331 B1**
(45) Date of publication and mention of the grant of the patent: **04.05.2005**
(21) Application number: 01975709.5
(22) Date of filing: 09.08.2001
(51) Int. Cl.: B29C 47/00, B29C 70/14

(54) **IMPROVED POLYMER MATRIX COMPOSITE**
VERBUNDMATERIAL MIT POLYMERMATRIX
SUBSTANCE COMPOSITE A MATRICE POLYMERE AMELIOREE

(30) Priority: 09.08.2000 US 223937 P
(43) Date of publication of application: 07.05.2003
(73) Proprietor: Ohio University, Athens, Ohio 45701-3751 (US)
(72) Inventor: ALAM, M., Khairul, Athens, OH 45701 (US); KURIGER, Rex, J., Athens, OH 45701 (US)
(74) Representative: Neill, Alastair William
(86) International application number: PCT/US2001/041650
(87) International publication number: WO 2002/011971

(56) References cited:
- EP-A- 0 448 719
- EP-A- 0 947 466
- WO-A-94/09972
- WO-A-96/34045
- US-A- 4 199 637
- US-A- 4 449 774
- US-A- 4 814 307
- US-A- 4 820 170
- US-A- 6 103 373

## Description

### Technical Field of the Invention

The present invention relates to polymer matrix composites with high strength, high thermal conductivity and high electrical conductivity as well as to processes for making these composites.

### Background

Many types of reinforcing fibers are currently used in composite materials. Glass fibers are the most common reinforcing fibers for polymer matrix composites due to their low-cost and high strength. They are commonly referred to as "basic" composites and are used in many high-volume applications, particularly the automotive industry. The disadvantages of glass fibers is that they have a relatively low modulus of elasticity and poor abrasion resistance. This results in a decrease in service rating and poor adhesion to polymer matrix resins, especially in the presence of moisture.

The so-called "advanced" composites, which are made from carbon, aramid, boron, or other high modulus fibers, are used primarily for more exotic aerospace and military applications where their higher costs can be justified by improved performance.

Carbon fibers are currently the most widely used advanced fibers, and are generally manufactured by the pyrolysis of a polyacrylonitrile (PAN), or a pitch precursor. Each process used to produce carbon fibers has distinct advantages and disadvantages in terms of cost and strength properties. PAN derived fibers have excellent properties, making them the most commonly used carbon fiber. Pitch-based fibers are of lower quality and inferior properties, but are currently the lowest-cost carbon fiber on the market. When compared to glass fibers, carbon fibers offer higher strength and modulus, lower density, outstanding thermal and electrical conductivity, but are much higher in cost. The high cost of producing carbon fibers is the principle barrier prohibiting carbon fiber reinforced composites from wider commercial application.

Recently, new manufacturing processes have been developed which produce carbon fibers at significantly lower cost. In particular, a method was developed to catalytically grow short carbon fibers by vapor deposition from hydrocarbons. See, US Patent No. 5,024,818 to Tibbetts et al. The end product is a discontinuous mass of tangled microscopic carbon fibers. These fibers typically have a diameter of about 0.2 micrometers and a length ranging from 50 to 100 microns or longer, and are significantly smaller than conventionally available carbon fibers, which are generally on the order of 7 microns in diameter.

These vapor-grown carbon fibers are highly graphitic with superior mechanical properties and have excellent electrical and thermal conductivities. Moreover, because of their relative low cost, they have the potential to replace glass and other reinforcing fibers currently used in cost-sensitive commercial markets.

However, vapor-grown carbon fibers become randomly aligned and entangled during production. Accordingly, when used as reinforcements, they enhance composite properties isotropically, i.e. essentially uniformly in all directions. Where it is desired to maximize composite performance anisotropically, for example along a given direction, it is necessary to align the fibers along that direction first.

Many techniques are known for aligning fibrous reinforcements in polymer composites. See, for example, US Patent No. 5,401,154 to Sargent as well as the Background section of US Patent No. 5,093,050 to Tepic. However, most of these techniques are effective only if the fibers are either continuous or above some minimum length. For example, the orientation method of the Sargent patent requires continuous fibers. Similarly, orientation with elongational flows is possible with chopped fibers, as described in the Tepic patent, but these reinforcements are normally at least 1/32 inch (∼ 1mm) in length. When the fibers become very short, for example on the order of 100 microns (0.1 mm) or less in length, these methods become largely ineffective.

Special methods have been proposed for aligning very short fibers in polymer composites. See, for example, US Patent No. 4,938,905 to Daimaru in which a drawing treatment is used to control the orientation of very short fibers in an extrudate. See also the above-noted Tepic patent in which short fibers are aligned by applying ultrasonic sound to a polymer/fiber matrix in which the polymer is in a gel state. However, the orientation achievable in Daimaru is inherently limited by the maximum draw ratio of the extrudate, while the Tepic approach is unattractive from a commercial perspective.

Accordingly, it is an object of the present invention to provide a new technique for aligning very short fibers in polymer matrix composites which is simple to carry out and yet effective to achieve significant fiber orientation.

In addition, it is a further object of the present invention to provide a new method of orienting very short fibers in polymer matrix composites which does not require drawing to achieve significant fiber orientation.

In addition, it is a further object of the present invention to provide new shaped articles made from the polymer matrix composites of the present invention which have superior electrical conductivities in their transverse direction.

And a still further objection of the present invention is to provide a new process for making such shaped articles.

### SUMMARY OF THE INVENTION

These and other objects are accomplished by the present invention which is based on the discovery that very short fibers can be easily oriented in polymer matrix composites by extruding a mixture of the fibers and matrix polymer through a die having a large surface to volume ratio, typically at least about 25.4cm⁻¹ (10 in⁻¹) and more normally at least about 127 cm ⁻¹ (50 in⁻¹).

Accordingly, the present invention provides a process comprising extruding a mixture of short reinforcing fiber and polymer through a die having a surface to volume ratio of at least about about 25.4 cm⁻¹ (10 in⁻¹) wherein the short reinforcing fiber has a diameter of about I micron or less, a length of 500 microns or less and an aspect ratio of about 10 to 750, thereby producing a fiber-reinforced polymer matrix composite with anisotropic properties arising because of the orientation of the short reinforcing fiber therein.

In addition, the present invention also provides a process for making a shaped polymer article having anisotropic electrical conductivity, the process comprising extruding a mixture of the polymer and vapor-grown carbon fiber through a die having a surface to volume ratio of at least about 25.4 cm⁻¹ (10 in⁻¹) wherein the short reinforcing fiber has a diameter of about 1 micron or less, a length of 500 microns or less and an aspect ratio of about 10 to 750, thereby producing multiple strands of extrudate, and bonding the strands together in an essentially parallel relationship to form the shaped articles.

In a preferred embodiment of the invention, the die also has a large length to width ratio as it has been further found that this enhances fiber orientation even more.

### BRIEF DESCRIPTION OF THE DRAWINGS

The present invention may be more easily understood by reference to the following drawings wherein:
Figure 1 is a schematic representation of the flow of a polymer/fiber mixture through a cylindrical die;
Figure 2 is a vector diagram illustrating the velocity differentials experienced by the polymer/fiber mixture of Figure 1 as it flows through the cylindrical die;
Figure 3 illustrates an extrusion die design useful in accordance with the present invention;
Figure 4 and 5 illustrate other examples of extrusion dies having high surface to volume ratios in accordance with the present invention;
Figure 6 illustrates a typical extrusion system for carrying out the present invention;
Figures 7, 8 and 9 illustrate extrusion dies useful in accordance with the present invention which have multiple extrusion pathways;
Figure 10 and 11 shows the x-ray diffraction patterns obtained when polymer matrix composite not made in accordance with the present invention were subjected to x-ray diffraction analysis;
Figure 12 is an x-ray diffraction pattern similar to Figures 10 and 11 showing the results obtained when a polymer matrix made in accordance with the present invention was subjected to x-ray diffraction analysis;
Figure 13 is an x-ray diffraction pattern similar to Figure 10 to 12 illustrating that fiber alignment cannot be discerned by the x-ray diffraction analysis used herein when fiber content is too low; and
Figure 14 is a graph illustrating the tensile strength of polymer matrix composites produced in accordance with the present invention.

### DETAILED DESCRIPTION

In accordance with the present invention, fiber-reinforced polymer matrix composite with improved anisotropic properties are made by extruding a mixture of very small reinforcing fibers and the matrix polymer through a die having a large surface to volume ratio, typically at least about 25.4 cm⁻¹ (10 in⁻¹).

### Reinforcing Fiber

The present invention is applicable to very small reinforcing fibers, that is fibers having lengths no greater than about 500 microns. More typically, the reinforcing fibers used in the present invention will have average lengths no greater than about 200 microns or even about 100 microns. Average lengths of about 5 to 100 microns are especially suitable.

In addition, the reinforcing fibers used in the present invention will typically have diameters of about 1 micron or less, typically about 0.5 microns or less or even about 0.2 micron or less. In this context, diameter means the maximum transverse direction of the fiber, as fibers with cross-sectional shapes other than circles are also useful in accordance with the present invention. In general, the fibers useful in accordance with the present invention may have an aspect ration (length/diameter) of about 10 to 750, more typically about 40 to 200.

The fibers useful in accordance with the present invention can be made from a wide variety of different materials including glass, carbon, silicon carbide, other fibrous mineral fillers, polymer materials and the like. Preferably, the fibers are made from carbon, with vapour-grown carbon fibers being especially preferred. As indicated above, vapour-grown carbon fibres are made by a vapour deposition process using a hydrocarbon source and typically have diameters on the order of about 0.1 to 0.2 microns and lengths on the order of 50 to 100 microns. In general, these fibers are essentially soot-free and are characterized by having an apparent density of less than 0.02 gram per cubic centimetre. Good results are obtained with vapour grown carbon fibers having diameters of up to 0.5 microns and lengths up to 500 microns.

Vapor grown carbon fibers are described in the above-noted Tibbetts et al patent, US 5,024,818, the disclosure of which is incorporated herein by reference. They differ significantly from conventional chopper fibers used for composite reinforcement, which are typically at least about 1mm (1/32 inch) long - essentially an order of magnitude larger.

Other types of fibers that are useful in the present investigation include "nonofibers" and "nanotubes". This relatively new class if fibers refer to elongated structures having a cross-section or diameter less than I micron. The structures may be either hollow or solid. Workd conducted by Kennel et al. indicate that these fibers having higher thermal and electrical conductivity and consequently offer great promise in the polymer matrix composites described herein. See US Patent No. 6,156,256; S. Iijima et al; Nature, Vol. 363, 603 (1993); D.S. Bethune et al., Vol. 363, 605, (1993) and R. Kuriger et al. Proceedings of the 34^{th} National Heat Transfer Conference, Session 55, (2000), the disclosures of which are incorporated herein by reference.

### Polymer

Essentially any polymer which is known, or which becomes known, as being useful for making polymer matrix composites can be used in carrying out the present invention. Suitable examples are described in the above-noted Tepic patent, US 5,093,050, the disclosure of which is also incorporated herein by reference.

Examples include thermoplastic polymers such as the polyolefins, especially polyethylene and polypropylene; vinyl resins such as polyvinyl chloride, polyvinyl acetate and polyvinyl alcohols, and nylons. Thermosetting resins such as polyesters, epoxides, polyurethanes as well as polymers and copolymers of acrylic and methacrylic acid and its esters and amides can also be used.

The improved polymer matrix composite of the present invention is made by an extrusion process, and accordingly the polymer selected for a particular embodiment must be sufficiently liquid to flow through the extruder. Many of the above polymers are thermoplastic and can be rendered flowable through simple heating. Others may require the addition of a solvent, as described in the above-noted Tepic patent. Still others can be rendered flowable by using a dispersion of the polymer in its own monomer, with final stages of polymerization occurring during of after extrusion, as further described in the above-noted Tepic patent.

Preferred polymers are those that readily wet the fiber surfaces and induce a strong bond between the fiber and polymer. When using vapor grown carbon fibers in accordance a preferred embodiment of the present invention, it is desirable to use a thermoplastic resin with a surface tension less than approximately 45 dynes per centimeter at room temperature (20° C), as these are able to more readily wet the surface of the fiber. See US Patent No. 5,433,906, the disclosure of which is also incorporated herein by reference. Examples of such polymers are polycarbonate, polyethylene, polypropylene and nylon.

### Proportions

The amount of reinforcing fiber that can be included in the improved polymer matrix composites of the present invention can vary widely, and essentially any amount can be used. Of course, the fiber/polymer mixture obtained must still be extrudable and capable of solidifying into a coherent extrudate. Typically, the inventive composites will contain about I to 70 percent fiber by volume, more typically about 2 to 40 vol.% and even more typically about 5 to 25 vol.%.

### Mixture Preparation

Normally, a homogeneous mixture of the ingredients to be incorporated in the composites of the present invention will be prepared in advance, i.e. prior to being charged into the extruder. However, these ingredients can be separately supplied to the extruder, or supplied in a non-homogeneous mixture, where the inherent mixing action of the extruder is sufficient to achieve the degree of mixing desired. In this connection, screw extruders may be desirable in some instances as they automatically shear mix the fiber/polymer mixture during processing.

Also, in those instances in which vapour-grown carbon fibers are to be used as the fibrous reinforcement, it is desirable to insure that moisture and volatiles are eliminated from the system. This can be easily done, for example, by heating the fibers in a moderate vacuum at 300°C for 3 hours before they are mixed with the polymer. If the polymer being used is hygroscopic, the mixture so formed should be dried under typical conditions used for drying that particular polymer.

### Extrusion

In accordance with the present invention, improved polymer matrix composites are produced using the very small reinforcing fibers described above by extruding a mixture of the fiber and the matrix polymer through a die having a large surface to volume ratio of at least about 25.4 cm⁻¹ (10 in⁻¹). In this context, surface to volume ratio means, for a given travel path through the due defined by an inlet, an outlet and walls extending between the two, the ratio of the surface area of the travel path walls to the travel path volume. In accordance with the invention, it has been found that the internal shear forces set up in a fiber/polymer matrix flowing through a travel path with such a large surface to volume ratio is sufficient to substantially orient the even the very small reinforcing fibers of the present invention. Some orientation of conventional chopped fibers through "elongated flows" has been reported, for example in the above noted Tepic patent, but these fibers are larger by an order of magnitude than the fibers of the present invention, at least in its preferred embodiment. Since the driving force for fiber orientation, the torque acting on the ends of the fibers created by shear forces as the polymer flows, are much smaller with the very small fibers of the present invention, it is unknown if the "elongated flows" previously reported could accomplish any meaningful orientation of the very small reinforcing fibers of the present invention.

In accordance with the present invention, however, it has been discovered that these forces are sufficient to provide significant fiber orientation, provided that the die employed has an area to volume ratio of at least about 25.4 cm⁻¹ (10 in⁻¹), preferably at least about 127 cm⁻¹ (50 in⁻¹), even more preferably at least about 254 cm⁻¹ (100 in⁻¹) or even 508 cm⁻¹ (200 in⁻¹).

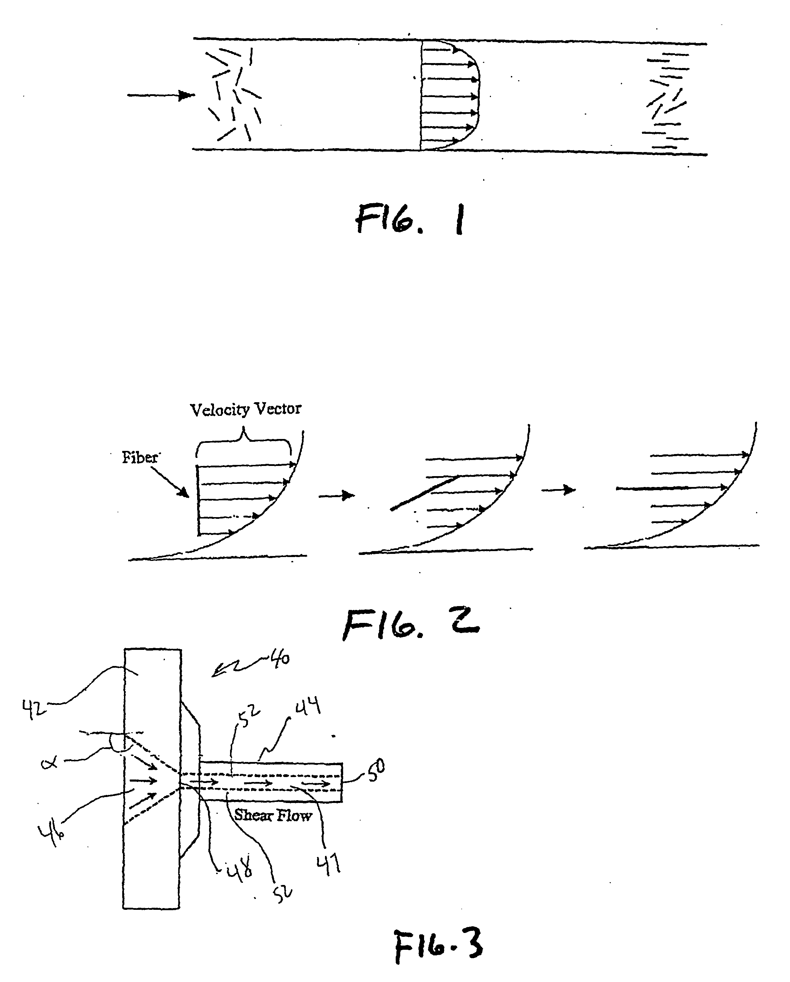

This may be more readily understood by reference to Figure 1, which is a schematic representation of the flow of a polymer/fiber mixture through a cylindrical die. As shown in this figure, the flow has much lower velocity near the walls as compared to the center of the tube. This produces a rate of strain (or a shear) in the flow. The flow field is such that the gradient is zero at the center of the flow channel and the highest strain rate (or shear) occurs along the walls. The fibers suspended in the polymer matrix experience the effects of these velocity differentials, causing the ends of the fibers nearest to the center of the flow channel to move faster than the ends closer to the wall. See Figure 2. This effect will result in progressive rotation of the fiber to bring it in alignment with the flow direction.

This alignment effect is obviously higher if the fiber is longer. When the fiber is longer than the diameter of the flow channel, the fibers must be aligned in order to enter the flow channel. However, for very short fibers, such as vapor-grown carbon fibers that are typically shorter than 0.1 mm, the practical value for the channel diameter is at least an order of magnitude higher than the fiber length. Therefore, these fibers can only be aligned by the flow strain that is present near the walls. In accordance with the present invention, it has been determined that, even though the die channel diameter may be very large compared with the length of the very small fibers used in the present invention, sufficient orienting effect can still be achieved if the die has a relatively high surface area or, in other words, a large surface to volume ratio.

In accordance with a preferred embodiment of the invention, it has been further found that the alignment effect resulting from the use of a die with a large surface to volume ratio can be enhanced even further by subjecting the fiber/polymer mass to the above alignment effect for a longer duration. This can be achieved, for example, by extending the length of the die, which produces a longer residence time. For example, the alignment spread produced when a fiber/polymer mixture was extruded through two dies each having a high surface to volume ratio (SN = 50 in⁻¹) in accordance with the present invention was 23.7° in the die having a length/width ratio of 6 (L/W = 6) but 15° in the die having a L/W of 30. Accordingly, it is desirable in accordance with the invention that thd ie also have a lage length to width ratio, i.e. L/W of at least about 6. More preferably, the L/W ratio is 10 or more, or even 20 or more. L/W ratios of 30 or more, or even 40 or more, are contemplated.

An example of a die design which is useful in accordance with the present invention is illustrated in Figure 3. This die generally indicated at 40 includes a converging section 42 for attaching to the barrel of an extruder (not shown) and a shear section 44 attached to the converging section 42. Converging section 42 defines a converging channel 46 for receiving a flowable polymer/fiber mixture from the barrel of the extruder and converging it to the smaller flow channel in shear section 44, as further discussed below. Preferably, converging angle a is less than 80°, e.g. about 70° to <80°, to produce a converging flow without dead zones and flow reversals that are detrimental to fiber alignment.

Shear section 44 defines a flow channel or pathway 47 which begins at an inlet 48, terminates at an outlet 50 and is generally defined by walls 52 extending between the inlet and outlet. In accordance with the present invention, the surface to volume ratio of the die, that is the ratio of the area defined by walls 52 to the volume between these walls, extending between inlet 48 and outlet 50, is at least 25.4 cm⁻¹ (10 in⁻¹), more typically at least about 127 cm⁻¹ (50 in⁻¹) and even more typically at least about 254 cm⁻¹ (100 in⁻¹) or even 508 cm⁻¹ (200 in⁻¹). This is a far larger ratio than in conventional extruders in which the surface/volume ratio is normally about 12.7 cm⁻¹ (5 in⁻¹).

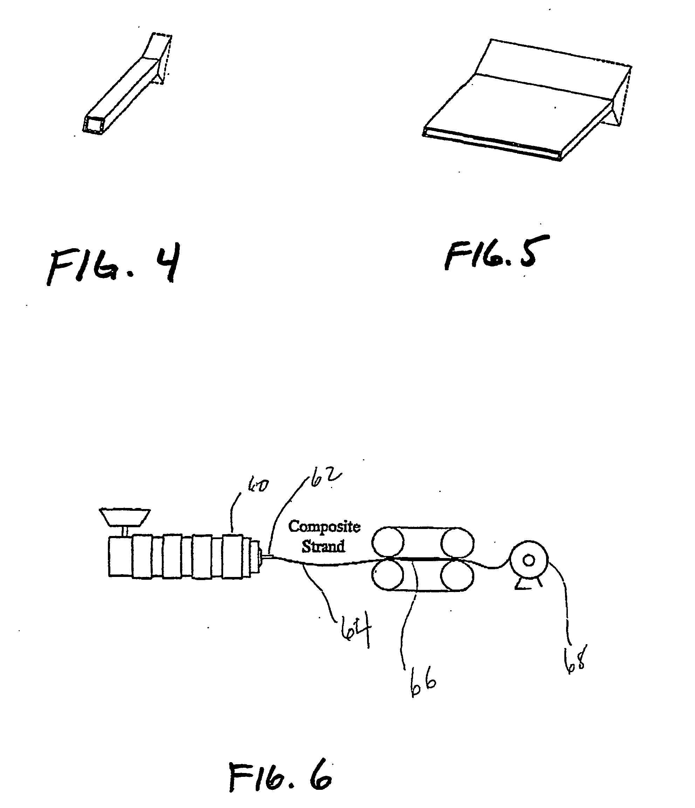

Other examples of dies which have high surface to volume ratios in accordance with the present invention are set forth in Figures 4 and 5.

Figure 6 illustrates a typical extrusion system for carrying out the inventive process. In this system, extruder 60 charges an extrudable fiber/polymer mixture through die 62. In accordance with the present invention, die 62 is configured so the flow channel or pathway through the die has a large surface to volume ratio of at least 25.4 cm⁻¹ (10 in⁻¹). This causes the fiber/polymer mixture to exit the outlet of the die's flow channel in the form of a strand or ribbon 64.

Composite processing is initiated by feeding the fiber/polymer mixture, typically in granulated form, into extruder 60. As the processed composition mixture exits the extruder, a narrow die 62 in accordance with the present invention orientates the fibers suspended in the polymer matrix to produce a continuous, uniform diameter composite strand or ribbon 64 reinforced with aligned very small fibers, preferably vapor-grown carbon fibers. The process is continuous and the composite strand is collected and preferably kept in sufficient tension by a material-pulling device 66 until the polymer matrix solidifies. When the strand exits the die, it can be either air-cooled, or processed through a cooling bath. Air-cooling is preferred because it reduces shrinkage voids and crystallization of the polymer matrix. The cooling rate of the composite is dependent on many variables such as fiber content, melt-flow temperature, and screw speed. Once the composite strand solidifies, it passes through puller 66 and is collected by fiber-winder 68.

As illustrated in Figure 6, optional puller 66 is provided to draw strand 64 away from die 62 as it solidifies. For this purpose, puller 66 can be operated at essentially the same speed as molten fiber/polymer mix exiting die 62. In this case, just enough tension is applied by puller 66 to strand 64 to keep it suspended in air or other cooling medium and moving in its travel path. In accordance with another embodiment of the invention, however, puller 66 can be operated at a faster speed so as to impart significant tension on strand 56, thereby achieving draw down of strand 64 to a narrow diameter. Preferably, draw down is accomplish in an amount of at least 25% in terms of the strand diameter, preferably at least 50%. Since drawing of the strand in this manner will achieve further axial orientation of the fiber, this embodiment achieves still more fiber orientation than operating without draw down.

### Shaped Articles

As described above, the fiber/polymer extrudate produced by the inventive process is in the form of a strand or ribbon, since it is produced in a die having a large surface to volume ratio. In accordance with another aspect of the present invention, these strands or ribbons are used to make articles of infinitely varying shape, both simple and complex, with anisotropic properties arranged in any desired manner.

This can be done, for example, by bonding together multiple strands or ribbons produced by the inventive process arranged in the aggregate in the desired configuration of the ultimate product to be produced, with the individual strands or ribbons being arranged essentially in parallel in the direction where the preferential properties are desired. For example, a shaped article having superior strength, electrical conductivity and/or thermal conductivity across its thickness relative to its length and width can be easily made by laying up multiple strands or ribbons produced by the present invention essentially in parallel and aligned with the thickness direction of the article and then bonding the strands together by fusion bonding, hot compression or other conventional technique.

Alternatively, a mass of indiscriminate shape such as a block can be made by bonding together multiple, parallel strands or ribbons produced by the inventive process followed by machining this mass into the final shape desired. Because the invention polymer matrix composite is relatively easy to machine, for example by cutting, sawing or the like, articles of complex shape having preferential properties arranged in any desired direction can be easily made in this manner as well. This approach is especially suitable for making thin articles such as plates, sheets, webs and the like with preferential properties arranged in the thickness direction, since a large composite mass can be easily built up and then sliced in a direction tranverse to the aligned fiber direction in any desired thickness.

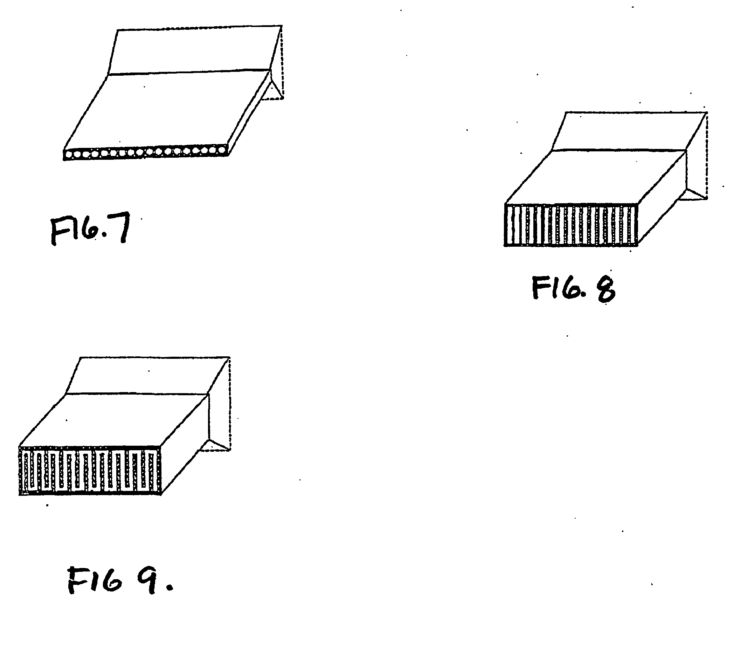

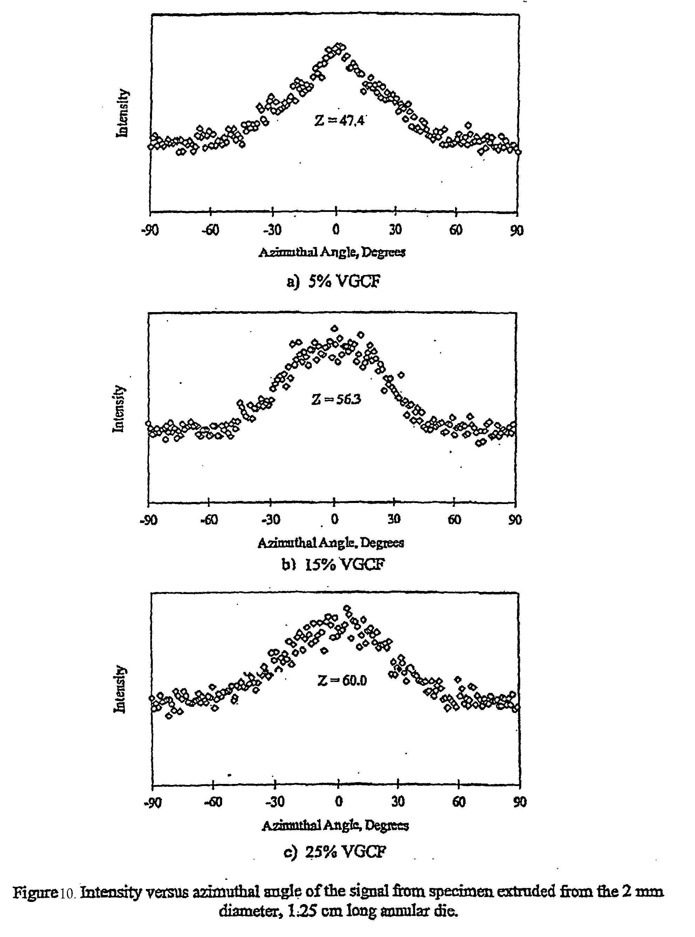

In an especially preferred embodiment of the invention, shaped articles are made following this general approach using extrusion dies having multiple extrusion pathways, each having a large surface to volume ratio of at least 25.4 cm⁻¹ (10 in⁻¹), more typically at least about 127 cm⁻¹ (50 in⁻¹) and even more typically at least about 254 cm⁻¹ (100 in⁻¹) or even 508 cm⁻¹ (200 in⁻¹). Examples of such dies are illustrated in Figures 7, 8 and 9. As can be seen, each of these dies has multiple extrusion pathways (or in the case of Figure 9 multiple extrusion pathway sections) each of which has a large surface to volume ratio. Building a shaped article by bonding together multiple, parallel strands or ribbons is made particularly easy by following this approach, since the multiple extrudates (or a multi-faceted extrudate in the case of Figure 9) can be joined immediately as they exit the die before solidification. This greatly reduces the physical manipulation steps needed to assemble multiple strands and/or ribbons into an article of desired shape.

In accordance with still another aspect of the present invention, it has been found that shaped articles made following this general approach and using vapor-grown carbon fibers as the fiber reinforcement exhibit not only excellent electrical conductivities in their aligned fiber directions but also superior tensile strengths as well. In particular, it has been found that ultimate tensile strengths of such articles, in their aligned fiber directions, are as much as 5 Mpa (725 psi) greater than that of articles otherwise the same but made with conventional carbon fibers instead. This is surprising and enables useful articles to be made from polymer composites with combinations of properties not possible before.

### Utility

Polymer matrix composites have already been used for making a wide variety of different commercial products, and the polymer composites of the present invention can also be used for these purposes.

An especially desirable use for the composites of the present invention, however, is in making shaped articles having preferential electrically conductivity in a predetermined, desired direction. Examples of such articles are electrodes, electromagnetic shielding boxes, self defrosting windshield wipers, aircraft defrosting systems, and the like. Such articles can be easily made following the principles of the present invention using carbon fibers, especially vapor-grown carbon fibers as the fibrous reinforcement.

A particularly desirable application of the present invention is in making electrically conductive composites which are thin and/or web-like in form, such as plates or sheets, and whose preferential electrical conductivity is arranged in the thickness direction, or at an acute angle with respect to the thickness direction of the web. In this context, by "thin" is meant articles whose length and width are at ten time their thickness dimension. Preferred thin articles have lengths and widths at least 100 times their thickness dimension. Such web-like composites are especially useful in making electrode plates for use in batteries and fuel cells, since they are light weight, strong, vibration and shock resistant and electrically conductive in a direction transverse to their major faces.

In accordance with the present invention, such electrically conductive plates and webs can be easily made by slicing a large composite mass made as described above in a direction transverse to the aligned fiber direction to produce a plate or sheet of the desired thickness. Such plates or sheets can be used as is where a separate terminal or other means of electrical connection is unnecessary. However, where a separate means of electrical connection is desired, a current collector can be attached to the plate or sheet in a conventional manner. For example, one of the major faces of the plate can be painted with an electrically conductive paint, with one or more wires or other electrical conductors bonded to the paint for collecting current passing through the plate or sheet in its thickness direction. Alternatively, a screen or web of metal or other electrically conductive material can be bonded to a major face of an electrically conductive plate of the present invention, or sandwiched between two such electrically conductive plates of the present invention, to serve as a current collector in electrical contact with a terminal or the like. Because the inventive web-like composites easily bond to other materials, as well as being strong, light weight, electrically conductive and resistant to shock and vibrations, electrodes based on such composite/current collector combinations are especially desirable.

### WORKING EXAMPLES

The following working examples are provide to more thoroughly illustrate the present invention.

### Fiber Alignment

To evaluate polymer matrix composite articles formed in accordance with this invention, test specimens were formulated containing 1 to 23% volume fraction vapor-grown carbon fiber made in accordance with the above-noted Tibbetts et al. patent, US 5,024,818. The fibers had a diameter of about 0.2 micrometers and lengths ranging from 50 to 100 microns and were manufactured by Applied Sciences, Inc., ("ASI") of Cedarville, OH, under the name PR-21-AG. They are essentially soot-free and are characterized by having an apparent density of less than about 0.02 grams per cubic centimeter. The fibers were dried in a vacuum oven at approximately 300°C for duration of about 3 hours to assure removal of moisture and volatiles. They were then thoroughly mixed in a dual-shell dry blender with Pro-Fax 6301, a polypropylene homopolymer manufactured by Montell U.S.A. Inc. For purposes of comparison, a test specimen containing 5% conventional PAN-derived carbon fibers obtained from Mitsubishi Chemical Company and having a diameter of 7 microns and lengths from 2 to 3 mm was also evaluated.

A Leistritz LSM 30.34 twin-screw laboratory extruder was used to process each of the mixtures with varying fiber contents. The specific temperatures at which the samples were extruded varied according to the amount of carbon fiber present in the mixture as set forth in Table 1 below. This was necessary to compensate for the higher viscosity associated with the increase in fiber concentration of the mixtures.

**Table 1**

| | VGCF Volume Fraction | | | | | | | |
|---|---|---|---|---|---|---|---|---|
| | 1% | 2.5% | 5% | 7% | 9% | 11% | 17% | 23% |
| Extrusion temperature | 205°C | 210°C | 215°C | 225°C | 230°C | 240°C | 245°C | 255°C |

A constant temperature of 170°C was applied to the narrow die for all the samples. Also, to better understand the effect of residence time in accordance with the present invention, the composite mixtures were extruded through two different dies, both dies having a narrow (2 mm diameter) annular flow passageway 47 as illustrated in Figure 3, the surface to volume ratio in both of these dies being 203.2 cm⁻¹ (80 in⁻¹). However, one of the dies had a flow passageway 1.25 cm in length, which corresponds to a length/width (L/W) ratio of 6. The other die had a flow passageway 6.5 cm long, which corresponds to a L/W ratio of 30.

The strands so made were then analyzed directly to determine mechanical strength and electrical conductivity. In addition, anisotropic composite cubes were made from the strands and the thermal conductivity of the cubes so made measured in all three directions. Composite cubes were tested for thermal conductivity because such composite cubes are more representative of actual parts made for real-life industrial applications.

The composite cubes were made by cutting and placing multiple composite strands in a mold, the strands being arranged unidirectionally with respect to one another. The strands were then hot-pressed into all 3.5719 mm (1/8") thick sheet in an evacuated chamber. The composite sheet so formed has essentially the same degree of fiber alignment as found in the extruded strands. The 3.5719 mm (1/8") thick composite sheet was then cut into 25.4 mm (1") by 38.1 mm (1.5") rectangular pieces. These individual pieces were then stacked into a 25.4 mm (1") by 38.1 mm (1.5") mold (typically 4 to 6 pieces) and hot pressed in a vacuum at approximately 232.2 C (450 °F). The product obtained is a solid rectangular polymer cube reinforced with aligned VGCF.

The thermal conductivities of the cube specimens were then measured using a Holometrix µ Flash Thermal Properties Instrument. All three directions of the cubes were tested: with Direction 1 being the aligned or preferred direction, Direction 2 being the tranverse direction, and Direction 3 being the perpendicular direction. The results are shown below in Table 2.

**Table 2**

| | Thermal Conductivity (W/m-K) | | |
|---|---|---|---|
| Direction | 9% | 2.5% | 5% |
| 1 | 2.09 | 2.44 | 5.38 |
| 2 | 2.42 | 2.47 | 2.49 |
| 3 | 0.73 | 1.35 | 1.81 |

The above measurements show that it is possible to produce a cube-like composite product that has high thermal conductivity along the preferred direction.

The composites produced were analyzed to determine the extent of fiber alignment. An accurate method for determining the alignment of fiber contained in a composite material is x-ray diffraction. In this technique, a beam of x-rays is used to probe repeating planes of atoms, and the reflection of x-rays off of repeating planes of atoms creates a series of spots called a diffraction pattern. In a fiber/polymer composite, the diffraction pattern also changes as the angle between the x-ray beam and the fiber face is varied. By collecting data from a series of orientation angles, the three dimensional atomic structure of a material can be calculated. This technique was adopted to determine the degree of fiber alignment in the reinforced composite materials. Some of the x-ray diffraction data was collected using double crystal monochromated synchrotron radiation at 0.1307 nm incident on the sample with the flat-film Laue data collected by an image plate. Other x-ray diffraction studies were carried out using a Huber 4-circle x-ray diffractometer in symmetric transmission with an incident beam crystal monochromated CuKα radiation (λ = 0.15418 nm) from a Rigaku RU-200 rotating anode generator at a power of 45 kV and 70 mA.

The commonly used measure of graphene alignment is the full-width of the azimuthal diffraction measured at one-half the maximum intensity. This measurement is usually designated as "Z" and given in degrees. This measure represents the spread of the majority of graphene planes and should be thought of as the cone angle since the alignment is in 3-dimensions. The value should be halved to get measure of how far from the fiber or strand axis the planes are misaligned. When this measurement is used on composites, the absolute alignment of the fibers cannot be determined but a relative amount of alignment can be inferred. Figure 10 shows the x-ray diffraction profiles performed on the specimens extruded from the die having a surface to volume ratio of 80 and a residence time of approximately 25 msec. The intensity of the x-ray diffraction at different angles indicates the distribution of fiber orientation in the composites. The specimens were tested so the 0 degree azimuthal angle corresponded to the preferred direction, and 90 degrees conforms to the transverse direction of the composite materials. If the fibers are aligned, the intensity of the diffraction pattern at high angles should be very low, whereas the intensity in the preferred direction (0 degrees) should be relatively high. The leveled intensity at ± 90 degrees is the background intensity. This can be seen in Figure 10, where the fibers are oriented ± 23.7, ± 28.15 and ± 30.0 degrees along the preferred direction for the 2.4%, 7% and 11% specimens, respectively.

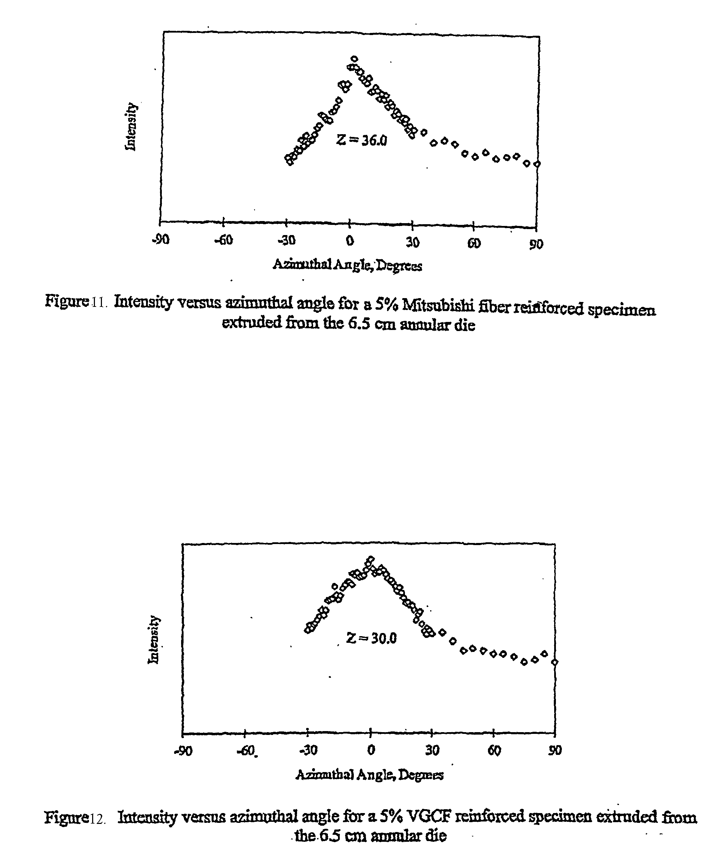

The much longer conventional PAN-derived carbon fibers (3 mm long) were highly oriented ± 18.0 degrees when extruded through the 6.5 cm annular die section. See Figure 11. Such a high degree of orientation is expected because these fibers are longer than the channel diameter (2mm).

However, by increasing the length of the narrow die it is possible to get higher residence time and greater alignment with the very short vapor-grown carbon fibers. This is verified in Figure 12 by examining the diffraction pattern of a 2.4% vapor-grown carbon fibber specimen that was extruded through the 6.5 cm long die (L/W = 30). It can be seen from Figure 12 that the vapor-grown carbon fibers are oriented within ± 15.0 degrees along the preferred direction when extrusion is carried out with a 6.5 cm long narrow (2 mm diameter) die. This is a 58% increase in the alignment value ("Z") when compared with the specimens extruded through the 1.25 cm annular die region which aligned the fibers ± 23.7 degrees. It is important to note that the alignment value obtained for the vapor-grown carbon fibers in the longer die is slightly better than that obtained for the longer conventional PAN-derived carbon fibers.

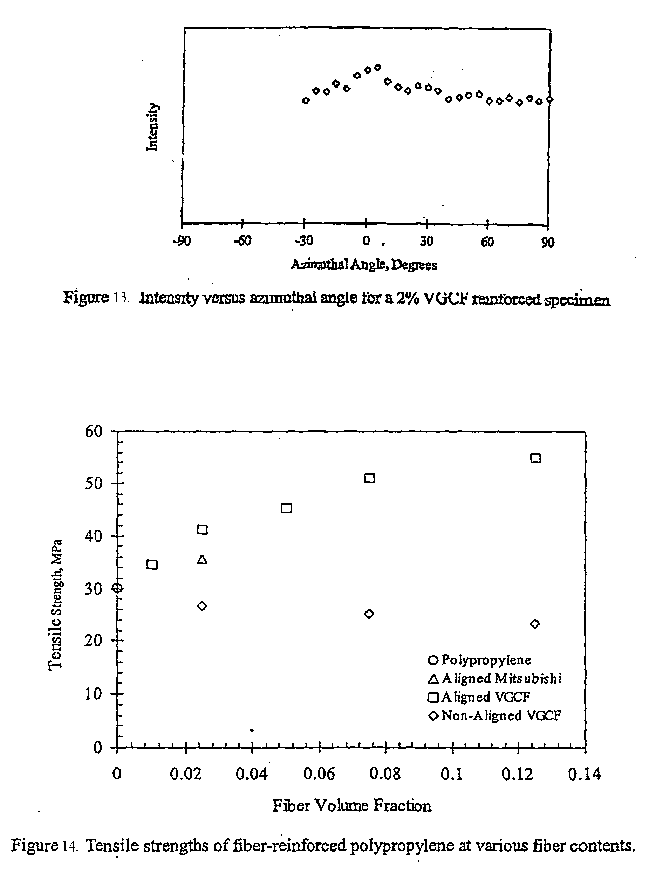

It should be noted that, when fiber content levels are too low, the diffraction intensity levels don't peak ot indicate any degree of fiber alignment. See Figure 13. This is believed to occur because the intensity of the diffracting crystalline planes of the polypropylene matrix peaks higher and/or overlaps the peaks of the fibers. This is not a problem at higher fiber concentrations because the polypropylene diffraction patterns cannot be viewed or extracted due to the high diffraction intensity of the graphitic planes of the fibers.

### Electrical Resistivity

Vapor-grown carbon fiber/polypropylene mixtures containing 9%, 16.7%, and 23% vapor-grown carbon fiber by volume were prepared and processed through a Leistritz twin-screw extruder as described in the previous examples. Two types of vapor-grown carbon fibers, as supplied by ASI, were examined. The first, designated PR-19-HT (LD), was manufactured to maximize electrical conductivity. This fiber was heat treated at 3000°C and was debulked using the Littleford Day process. It had a bulk density of about 192.33-208.37 kilos/m³ (12-13 lbs/ft³). The second fiber, designated, PR-21-PS (PPI), was manufactured to maximize mechanical properties. It was pyrolytically stripped and had a bulk density of approximately 48.1-64.1 kilos/m³ (3-4 lbs/ft³).

Extruded strands produced in the manner described above were amalgamated into blocks or cubes in the same way as discussed above for testing electrical conductivity. Both the individual strands and cube samples were tested for electrical conductivity using a basic four-point measurement apparatus. The results are shown in Table 3.

**Table 3**

| | Resistivity (Ohm-cm) | | |
|---|---|---|---|
| | 9% | 16.7% | 23% |
| PR-19-HT | 3.355 | .0204 | 0.106 |
| PR-21-PS | 1966.70 | 71.79 | 3.886 |

The above results show that the fibers manufactured to enhance electrical conductivity, PR-19-HT fibers, are much more conductive than the fibers manufactured to maximize strength regardless of carbon fiber concentration. In addition, these results further show that, for both fibers, electrical conductivity increases significantly with increasing carbon fiber content.

To analyze the electrical conductivity of the cube specimens, the amalgamated blocks were first machined square. This was necessary due to the shrinkage and distortion of the blocks during the cooling process. This also eliminates any possible insulating polymer layer, which may have formed during the molding process. All three directions of the cubes were tested: with Direction 1 being the aligned or preferred direction, Direction 2 being the transverse direction, and Direction 3 being the perpendicular direction. The analysis was performed by painting the sides of the cube in the test direction using a silver conductive paint. This eliminated contact resistance of the probes and allowed for a basic two-point measurement to be performed using a digital multimeter.

**Table 4**

| | Resistivity (Ohm-cm) | | |
|---|---|---|---|
| Direction | 9% | 16.7% | 23% |
| 1 | 12.63 | 2.87 | 0.57 |
| 2 | 23.32 | 3.21 | 2.34 |
| 3 | 26.29 | 24.64 | 17.63 |

The above measurements show that large shaped articles can be produced with high or preferential electrical conductivity in any desired direction by forming a bulk product with aligned vapor-grown carbon fibers in accordance with the present invention and then slicing, cutting or otherwise machining the bulk product to achieve the desired product. This technique is ideally suited for use in forming electrode plates for use in batteries and fuel cells by forming a bulk product with aligned vapor grown carbon fibers and then slicing the bulk product transversely to the aligned fiber direction to produce plates or sheets of any desired thickness with preferential electrical conductivity in the thickness direction. If desired a screen or sheet made from a metal or other electrically conductive material can be bonded to one of the major faces of such a composite sheet, or bonded between two such composite sheets, to serve as a current collector for providing an external terminal.

### Tensile Tests

To evaluate the tensile properties of composite articles formed in accordance with the present invention, test specimens were formulated containing from 1% to 12.5% by volume vapor-grown carbon fibers. Pyrograf-III type PR-21-PS vapor-grown carbon fibers supplied by Applied Sciences, Inc. (ASI) were used along with a Pro-fax 6301 polypropylene homopolymer manufactured by Montell U.S.A., Inc. The carbon fibers had diameters of approximately 200 nanometers and lengths ranging from 20-80 microns.

The samples were prepared by vacuum drying the vapor-grown carbon fibers at 300° C for three hours. This was sufficient to remove any moisture entrapped by the entangled fiber particles. The carbon fibers were then mixed at room temperature with the powdered polypropylene resin using a twin-shell dry blender until a homogenous mixture was formed. Since the polypropylene matrix material was not very hygroscopic, further drying of'the mixture was not necessary.

After thoroughly blending the fiber-matrix mixture, a Leistritz LSM 30.34 twin-screw laboratory extruder was employed to process the mixture. Each mixture with varying fiber contents was shear mixed and extruded through the shear die. The specific temperatures at which the samples were extruded varied and the amount of carbon fiber present in the mixture are shown in Table 1.

Once extruded, the ultimate strength and degree of fiber alignment were quantified. Improved strength properties in the composite material demonstrates fiber alignment. Therefore, tension testing was necessary to determine these properties. To prepare tensile specimens, the vapor-grown carbon fibers-reinforced composite strands were cut and placed in a unidirectional manner into a mold. The strands were then hot-pressed into a 3 mm thick sheet and were slowly cooled in air at room temperature. This molding process does not significantly affect fiber alignment and essentially produces a composite sheet with the same degree of fiber alignment as found in the extruded strands. Tensile specimens were then machined from the composite plates conforming to ASTM D638 Type-II specifications. The ultimate tensile strength was then measured and recorded by a Tinius Olsen bench-top testing machine equipped with a Keithley data acquisition system at a rate of 2 mm/min.

For comparison purposes, two additional test specimens were prepared, one containing the conventional PAN-derived carbon fibers described above (7 micron diameter, 2 to 3 mm in length) and the other containing randomly-aligned vapor-grown carbon fibers. The test specimen containing the randomly-aligned fiber was prepared by allowing the polymer/fiber mixture to deposit into a mold after extrusion through a large oval opening. Since the extrusion ratio is not large and the composite melt has a high flow rate into the mold, the result is a composite that had very little fiber alignment. Since the die opening is large, the extrusion pressure was negligible compared to the aligned vapor-grown carbon fibers composite.

The results of the tensile tests are shown in Figure 14. As can be seen from this figure, the tensile strength of extruded polypropylene was greatly improved by introducing aligned vapor-grown carbon reinforcing fibers into the polymer mass in accordance with the present invention. When compared with pure polypropylene, an 83% increase in strength was observed with only a 11% fiber volume content. More modest increases of 70%, 51%, 37%, and 16% occurred in the 7%, 4.7%, 2.4% and 1% fiber volume mixtures, respectively. In contrast, the composite having randomly-oriented vapor-grown carbon fibers showed a degradation of the tensile strength as compared to pure polypropylene. Degradation of composite properties can also be due to higher void content (due to lower extrusion pressure), and poor bonding between the fiber and the polymer during the extrusion process. The composites with 11% aligned vapor-grown carbon fibers had a tensile strength that was almost 2.5 times the non-aligned composites.

The test specimen containing the conventional PAN-derived carbon fiber also demonstrated a significant increase in tensile strength, which suggests that some alignment of the fibers occurred in these composites as well. However, the amount of tensile strength increase, 18.6%, is considerably less than that occurring in the corresponding aligned fiber specimen made in accordance with the present invention, 37%. This is especially surprising since the conventional PAN-derived fibers are much bigger and hence subject to a much greater aligning torque during extrusion than the vapor-grown carbon fibers of the other test specimens.

Although only a few embodiments of the present invention have been described above, it should be appreciated that many modifications can be made.

All such modifications are intended to be included within the scope of the present invention, which is to be limited only by the following claims.

## Claims

1. A process comprising extruding a mixture of short reinforcing fiber and polymer through a die having a surface to volume ratio of at least about 25.4 cm⁻¹ (10 in⁻¹), wherein the short reinforcing fiber has a diameter of about 1 micron or less, a length of 500 microns or less and an aspect ratio of about 10 to 750, thereby producing a fiber-reinforced polymer matrix composite with anisotropic properties arising because of the orientation of the short reinforcing fiber therin.

2. The process of claim 1, wherein the mixture is extruded through multiple die pathways thereby producing multiple strands of extrudate, each die pathway having a surface to volume ratio of at least 25.4 cm⁻¹ (10 in⁻¹).

3. The process of claim 2, further comprising bonding the strands together in an essentially parallel relationship, thereby forming a shaped article with anisotropic properties.

4. The process of claim 1, wherein the short reinforcing fiber is about 200 microns or less in length.

5. The process of claim 4, wherein the short reinforcing fiber has a diameter of about 0.5 micron or less.

6. The process of claim 5, wherein the short reinforcing fiber has an aspect ratio of about 40 to 200.

7. The process of claim 1, wherein the die has a length to width ratio of at least about 6.

8. The process of claim 1, wherein the short reinforcing fiber is a vapor-grown carbon fiber.

9. The process of claim 1, wherein the mixture contains about 1 to 50 wt% short reinforcing fiber.

10. A process for making a shaped polymer article having anisotropic electrical conductivity, the process comprising extruding a mixture of the polymer and vapor-grown carbon fiber through a die having a surface to volume ratio of at least about 25.4 cm⁻¹ (10 in⁻¹), wherein the short reinforcing fiber has a diameter of about 1 micron or less, a length of 500 microns or less and an aspect ratio of about 10 to 750, thereby producing multiple strands of extrudate, and bonding the strands together in an essentially parallel relationship to form the shaped article.

11. The process of claim 10, wherein the multiple strands of extrudate are made by extruding the mixture through multiple die pathways each having a surface to volume ratio of at least about 10.

12. The process of claim 10, wherein the parallel direction of the strands defines a longitudinal direction of the shaped article, the process further comprising subdividing the shaped article along a surface arranged transverse to the longitudinal direction.

13. A shaped polymer article having anisotropic electrical conductivity, the article comprising a mixture of the polymer and vapor-grown carbon fibers arranged in an essentially parallel relationship.

## Patentansprüche

1. Verfahren, umfassend das Extrudieren einer Mischung aus kurzer Verstärkungsfaser und Polymer durch eine Düsenplatte, die ein Oberflächen-zu-Volumen-Verhältnis von mindestens ungefähr 25,4 cm⁻¹ (10 in⁻¹) besitzt, wobei die kurze Verstärkungsfaser einen Durchmesser von ungefähr 1 Mikrometer oder geringer, eine Länge von 500 Mikrometern oder geringer und ein Aspektverhältnis von ungefähr 10 bis 750 besitzt, wodurch ein faserverstärkter Polymer-Matrix-Verbund mit anisotropen Eigenschaften hergestellt wird, die aufgrund der Orientierung der kurzen Verstärkungsfasern darin entstehen.

2. Verfahren nach Anspruch 1, wobei die Mischung durch mehrere Düsenplatten-Durchgangswege extrudiert wird, um dadurch mehrere Stränge eines Extrudats zu erzeugen, wobei jeder Düsenplatten-Durchgangsweg ein Oberflächen-zu-Volumen-Verhältnis von mindestens 25,4 cm⁻¹ (10 in⁻¹) besitzt.

3. Verfahren nach Anspruch 2, das weiterhin ein Aneinanderbonden der Stränge in einer im Wesentlichen parallelen Beziehung aufweist, um dadurch einen geformten Gegenstand mit anisotropen Eigenschaften zu bilden.

4. Verfahren nach Anspruch 1, wobei die kurze Verstärkungsfaser ungefähr 200 Mikrometer oder geringer in der Länge ist.

5. Verfahren nach Anspruch 4, wobei die kurze Verstärkungsfaser einen Durchmesser von ungefähr 0,5 Mikrometern oder geringer besitzt.

6. Verfahren nach Anspruch 5, wobei die kurze Verstärkungsfaser ein Aspektverhältnis von ungefähr 40 zu 200 besitzt.

7. Verfahren nach Anspruch 1, wobei die Düsenplatte ein Längen-zu-Breiten-Verhältnis von mindestens ungefähr 6 besitzt.

8. Verfahren nach Anspruch 1, wobei die kurze Verstärkungsfaser eine mittels Dampf angewachsene Kohlefaser ist.

9. Verfahren nach Anspruch 1, wobei die Mischung ungefähr 1 bis 50 Gew.-% an kurzer Verstärkungsfaser enthält.

10. Verfahren, zum Herstellen eines geformten Polymergegenstands, der eine anisotrope, elektrische Leitfähigkeit besitzt, wobei das Verfahren ein Extrudieren einer Mischung des Polymers und der mittels Dampf angewachsenen Kohlefaser durch eine Düsenplatte, die ein Oberflächen-zu-Volumen-Verhältnis von mindestens ungefähr 25,4 cm⁻¹ (10 in⁻¹) besitzt, wobei die kurze Verstärkungsfaser einen Durchmesser von ungefähr 1 Mikrometer oder geringer, eine Länge von 500 Mikrometern oder geringer und ein Aspektverhältnis von ungefähr 10 bis 750 besitzt, um dadurch mehrere Stränge eines Extrudats herzustellen, und Aneinanderbonden der Stränge in einer im Wesentlichen parallelen Beziehung, um den geformten Gegenstand zu bilden, aufweist.

11. Verfahren nach Anspruch 10, wobei die mehreren Stränge aus Extrudat durch Extrudieren der Mischung durch mehrere Düsenplatten-Durchgangswege hergestellt sind, jeder mit einem Oberflächen-zu-Volumen-Verhältnis von mindestens ungefähr 10.

12. Verfahren nach Anspruch 10, wobei die parallele Richtung der Stränge eine Längsrichtung des geformten Gegenstands definiert, wobei das Verfahren weiterhin ein Unterteilen des geformten Gegenstands entlang einer Oberfläche, angeordnet quer zu der Längsrichtung, aufweist.

13. Geformter Polymergegenstand, der eine anisotrope, elektrische Leitfähigkeit besitzt, wobei der Gegenstand eine Mischung des Polymers und der mittels Dampf angewachsenen Kohlefasem, angeordnet in einer im Wesentlichen parallelen Beziehung, aufweist.

## Revendications

1. Procédé comprenant l'extrusion d'un mélange d'une courte fibre de renforcement et d'un polymère à travers une filière ayant un rapport surface/volume d'au moins environ 25,4 cm⁻¹ (10 pouces⁻¹), dans lequel la courte fibre de renforcement a un diamètre d'environ 1 micron ou moins, une longueur de 500 microns ou moins et un rapport d'aspect d'environ 10 à 750, en produisant ainsi un composite matrice de polymère renforcée par une fibre, ayant des propriétés anisotropes apparaissant du fait de l'orientation de la courte fibre de renforcement présente en son sein.

2. Procédé selon la revendication 1, dans lequel le mélange est extrudé à travers de multiples passages de filière, en produisant ainsi de multiples brins d'extrudat, chaque passage de filière ayant un rapport surface/volume d'au moins 25,4 cm⁻¹ (10 pouces⁻¹).

3. Procédé selon la revendication 2, comprenant en outre la liaison des brins ensemble selon une relation essentiellement parallèle, en formant ainsi un objet façonné ayant des propriétés anisotropes.

4. Procédé selon la revendication 1, dans lequel la courte fibre de renforcement a une longueur d'environ 200 microns ou moins.

5. Procédé selon la revendication 4, dans lequel la courte fibre de renforcement a un diamètre d'environ 0,5 micron ou moins.

6. Procédé selon la revendication 5, dans lequel la courte fibre de renforcement a un rapport d'aspect d'environ 40 à 200.

7. Procédé selon la revendication 1, dans lequel la filière a une rapport longueur/largeur d'au moins environ 6.

8. Procédé selon la revendication 1, dans lequel la courte fibre de renforcement est une fibre de carbone à croissance en phase vapeur.

9. Procédé selon la revendication 1, dans lequel le mélange contient environ 1 à 50 % en poids de la courte fibre de renforcement.

10. Procédé pour réaliser un objet en polymère façonné ayant une conductivité électrique anisotrope, le procédé comprenant l'extrusion d'un mélange du polymère et de la fibre de carbone à croissance en phase vapeur à travers une filière ayant un rapport surface/volume d'au moins environ 25,4 cm⁻¹ (10 pouces⁻¹), dans lequel la courte fibre de renforcement a un diamètre d'environ 1 micron ou moins, une longueur de 500 microns ou moins et un rapport d'aspect d'environ 10 à 750, en produisant ainsi de multiples brins d'extrudat, et la liaison des brins ensemble selon une relation essentiellement parallèle pour former l'objet façonné.

11. Procédé selon la revendication 10, dans lequel les multiples brins d'extrudat sont réalisés en extrudant le mélange à travers de multiples passages de filière, ayant chacun un rapport surface/volume d'au moins environ 10.

12. Procédé selon la revendication 10, dans lequel la direction parallèle des brins définit une direction longitudinale de l'objet façonné, le procédé comprenant en outre la subdivision de l'objet façonné le long d'une surface agencée transversalement à la direction longitudinale.

13. Objet en polymère façonné ayant une conductivité électrique anisotrope, l'objet comprenant un mélange du polymère et des fibres de carbone à croissance en phase vapeur agencées selon une relation essentiellement parallèle.
